# FASCICULE DE BREVET EUROPEEN

(11) **EP 1 831 109 B1**
(45) Date de publication et mention de la délivrance du brevet: **04.12.2013**
(21) Numéro de dépôt: 05809094.5
(22) Date de dépôt: 18.10.2005
(51) Int. Cl.: C01G 31/00, H01M 4/58, H01M 4/131, H01M 4/136, H01M 4/40, H01M 4/485, H01M 4/525, H01M 4/62, H01M 10/0525

(54) **PROCEDE DE PREPARATION DE GAMMA-LIV2O5.**
VERFAHREN ZUR HERSTELLUNG VON GAMMA-LIV2O5.
METHOD FOR THE PREPARATION OF GAMMA-LIV2O5.

(30) Priorité: 22.10.2004 FR 0411312
(43) Date de publication de la demande: 12.09.2007
(73) Titulaire: Blue Solutions, 29500 Ergué Gabéric (FR); Centre National de la Recherche Scientifique, 75016 Paris (FR)
(72) Inventeur: GUYOMARD, Dominique, F-44880 SAUTRON (FR); DESCHAMPS, Marc, F-29000 QUIMPER (FR); DUBARRY, Matthieu, Honolulu, 96815, HI (US); MOREL, Benoit, F-16350 CHAMPAGNE MOUTON (FR); GAUBICHER, Joël, F-44000 NANTES (FR)
(74) Mandataire: Sueur, Yvette
(86) Numéro de dépôt international: PCT/FR2005/002579
(87) Numéro de publication internationale: WO 2006/045921

(56) Documents cités:
- EP-A- 0 397 608
- US-A1- 2002 086 214
- J. BARKER, M.Y. SAIDI, J.L. SWOYER: "A Carbothermal Reduction Method for the preparation of Electroactive Materials for Lithium Ion Applications" J. ELECTROCHEM. SOC., vol. 150, no. 6, 2003, pages A684-A688, XP002332263 cité dans la demande

## Description

La présente invention concerne un procédé de préparation de γ-LiV₂O₅.

Les batteries comprenant une électrode positive et une électrode négative séparée par un électrolyte comprenant un sel de lithium en solution dans un solvant sont largement connues. Le fonctionnement de ces batteries est assuré par la circulation réversible d'ions lithium dans l'électrolyte entre les électrodes. L'électrode positive est généralement constituée par un matériau composite comprenant une matière active, un liant, un matériau conférant une conduction électronique, et éventuellement un composé conférant une conduction ionique. Le composé conférant une conduction électronique peut être un noir de carbone qui ne catalyse pas l'oxydation de l'électrolyte à potentiel élevé.

Il est connu d'utiliser un composé γ-LiₓV₂O₅ comme matière active d'électrode positive dans une batterie fonctionnant par échange d'ions lithium entre l'anode et la cathode à travers l'électrode. Un procédé de préparation de γ-LiV₂O₅ est décrit par J. Barker, et al. [Journal of the Electrochemical Society, 150, (6) A684-A688 (2003). Ledit procédé consiste à préparer un mélange de Li₂CO₃, de V₂O₅ et de carbone, à compresser le mélange pour en faire des pastilles, puis à soumettre les pastilles à un traitement thermique sous atmosphère d'argon dans un four à 600°C pendant 60 min. Il est précisé qu'à une température de 525°C, une durée de 10 heures est requise pour obtenir γ-LiV₂O₅ pur. En outre, Us-6,716,372 décrit un procédé con-sistant à mélanger Li₂CO₃, V₂O₅ et du carbone, à compresser le mélange pour en faire des pastilles, à porter le mélange à une température entre 400°C et 650°C à raison de 2°C/min, à maintenir pendant une certaine durée à cette température, puis à laisser refroidir à raison de 2°C/Min. La durée du maintien à température élevée est de l'ordre de 1 heure pour 600 ou 650°C, et de l'ordre de 8 heures pour 500°C.

Le but de la présente invention est de fournir un procédé simple et peu onéreux pour la préparation d'un matériau constitué par γ-LiV₂O₅ pur ou en mélange intime avec du carbone.

Le procédé selon la présente invention consiste à préparer une composition de carbone et de précurseurs de Li et de V, et à soumettre ladite composition à un traitement thermique. Il est caractérisé en ce que :
- la composition est préparée par mise en contact de carbone, de V₂O₅-α et d'un précurseur de Li, en quantités telles que le rapport des concentrations [V₂O₅]/[Li] est compris entre 0,95 et 1,05, et le carbone est en excès d'au moins 25% par rapport à la stoechiométrie ;
- le traitement thermique est effectué en deux étapes : une première étape à une température entre 90°C et 150°C pendant une durée de 1 à 12 heures ; une seconde étape à une température entre 420°C et 500°C, pendant une durée comprise entre 10 min et 1 heure, sous atmosphère d'azote ou d'argon ou sous vide.

La première étape est effectuée sous agitation énergique. Dans un mode de réalisation préféré, elle est effectuée dans un broyeur à billes.

La première étape du traitement thermique peut être effectuée à l'air. La durée de cette étape dépend de la température. Elle peut être réduite à environ 1 heure en mettant la composition à traiter sous forme d'une couche mince.

Si la durée de la seconde étape du traitement thermique est inférieure à 10 min, ou si la température de la seconde étape du traitement thermique est inférieure à 420°C, le matériau obtenu n'est pas γ-LiV₂O₅ pur, il contient Li_{1+α}V₃O₈ et/ou LiₓV₂O₅-β (0<x<0,7). Une durée supérieure à 1 heure entraîne une augmentation de la taille des cristallites qui conduit à une performance moins bonne en batterie.

La première étape du traitement thermique peut être effectuée dans une étuve avant d'introduire la composition dans le four qui sera utilisé pour la seconde étape du traitement thermique. La première étape du traitement thermique peut aussi être effectuée dans le four utilisé pour la seconde étape, si celui-ci comprend au moins deux zones de traitement, l'une à la température de la première étape, l'autre à la température de la deuxième étape.

Dans un premier mode de réalisation, le précurseur de Li est LiOH, H₂O ou Li₂CO₃. Le précurseur de vanadium V₂O₅-α, le précurseur de lithium et le carbone sont introduits dans une quantité d'eau telle qu'on obtienne une suspension visqueuse, et l'agitation énergique est maintenue pendant une durée de 1 à 2 heures. Les concentrations en précurseurs peuvent varier entre 0,5 mol/l et 5 mol/l pour V₂O₅-α, entre 0,25 mol/l et 2,5 mol/l pour le précurseur de lithium Li₂CO₃ et entre 0,5 mol/l et 5 mol/l pour le précurseur de lithium LiOH,H₂O.

Si les mêmes précurseurs sont mélangés en l'absence d'eau, la composition de carbone et de précurseurs de Li et de V conduit à un mélange de γ-LiV₂O₅ et LiₓV₂O₅-β (0<x<0,7) après le second traitement thermique.

Dans un second mode de réalisation, on ajoute au milieu réactionnel une solution aqueuse contenant de 10 à 50% en volume de peroxyde d'hydrogène, et l'agitation énergique est maintenue pendant 5 minutes. Les concentrations limites utilisables sont de 0,05 mol/l à 2 mol/l pour V₂O₅-α, et de 0,025 mol/l à 2 mol/l pour le précurseur de Li.

Dans le second mode de réalisation :
- le précurseur de lithium peut être choisi parmi Li₂CO₃, LiOH, H₂O, LiCl, LiNO₃, ou un sel de lithium d'un acide carboxylique, choisi par exemple parmi l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium ;
- on prépare une suspension aqueuse de V₂O₅-α et de carbone, et l'on y ajoute une solution aqueuse de peroxyde, le précurseur de lithium pouvant être introduit dans la suspension aqueuse de V₂O₅-α et de carbone avant l'addition de la solution de peroxyde, ou après l'addition de la solution de peroxyde c'est-à-dire au cours de la formation du gel, et on laisse sous agitation énergique pendant 5 min.
- les quantités respectives de précurseur de Li et de V₂O₅-α dans le milieu réactionnel sont de préférence telles que 0,1/z mol.l⁻¹ < [Li] < 1 1/z mol.l⁻¹ ; 0,1 mol.l⁻¹ < [V₂O₅] < 1 mol.l⁻¹, z étant le nombre d'atomes de lithium par unité formulaire du précurseur.

Des concentrations trop élevées en réactifs peuvent provoquer une effervescence, alors que des concentrations trop faibles donnent des précipités.

Lorsque l'excès de carbone dans le milieu réactionnel n'est pas supérieur à 25%, le matériau obtenu par le procédé de l'invention est un matériau constitué par des agglomérats de petites aiguilles de γ-LiV₂O₅.

Lorsque l'excès de carbone dans le milieu réactionnel est supérieur à 25%, le matériau obtenu est constitué par des agglomérats de petites aiguilles de γ-LiV₂O₅ entourées par une couche discontinue de particules sphériques de carbone. Un tel matériau est désigné ci-après par γ-LiV₂O₅ carboné.

Un matériau obtenu par le procédé selon la présente invention peut être utilisé pour l'élaboration d'une électrode composite positive pour une batterie au lithium ou pour une batterie aux ions lithium.

Dans un mode de réalisation particulier, une électrode positive est constituée par un matériau composite qui contient :
- un composé carboné ou non obtenu par le procédé de la présente invention,
- un liant conférant une tenue mécanique,
- éventuellement un composé conférant une conduction électronique,
- éventuellement un composé conférant une conduction ionique.

La teneur en γ-LiV₂O₅ carboné ou non est comprise de préférence entre 90 et 100 % en masse. La teneur en liant est de préférence inférieure à 10 % en masse. La teneur en composé conférant une conduction électronique est de préférence inférieure ou égale à 5 % en masse, et la teneur en matériau conférant une conduction ionique est de préférence inférieure ou égale à 5% en masse. Pour les électrodes constituées par γ-LiV₂O₅ non carboné, il est préférable que le matériau composite constituant l'électrode positive contienne un composé conférant une conduction électronique et un liant.

Le liant peut être constitué par un polymère non solvatant, par un polymère solvatant ou par un mélange de polymère solvatant et de polymère non solvatant. Il peut contenir en outre un ou plusieurs composés liquides polaires aprotiques. Le polymère non solvatant peut être choisi parmi les homopolymères et les copolymères de fluorure de vinylidène, les copolymères d'éthylène, de propylène et d'un diène, les homopolymères et les copolymères de tétrafluoro-éthylène, les homopolymères et les copolymères de N-vinylpyrrolidone, les homopolymères et les copolymères d'acrylo-nitrile et les homopolymères et les copolymères de méthacry-lonitrile. Le poly(fluorure de vinylidène) est particulièrement préféré. Le polymère non solvatant peut porter des fonctions ioniques. A titre d'exemple d'un tel polymère, on peut citer les sels de polyperfluoroéther sulfonate, dont certains sont commercialisés sous la dénomination Nation^{®}, et les sels de polystyrène sulfonate.

Le polymère solvatant peut être choisi par exemple parmi les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyde d'éthylène et d'épichlorhydrine ; et les réseaux obtenus par polycondensation et portant des groupements qui permettent l'incorporation de groupements réticulables.

Le composé polaire aprotique peut être choisi parmi les carbonates linéaires ou cycliques, les éthers linéaires ou cycliques, les esters linéaires ou cycliques, les sulfones linéaires ou cycliques, les sulfamides et les nitriles.

Le composé conférant une conduction ionique est un sel de lithium, choisi avantageusement parmi LiClO₄, LiPF₆, LiAsF₆, LiBF₄, LiR_{F}SO₃, LiCH₃SO₃, les bisperfluoroalkyl sulfo-nimidures de lithium, les bis- ou les trisperfluorosulfonyl-méthides de lithium.

Le composé conférant une conduction électronique peut être choisi par exemple parmi les noirs de carbone, le graphites, les fibres de carbone, les nanofils de carbone, ou les nanotubes de carbone.

Une électrode positive composite peut être élaborée en mélangeant γ-LiV₂O₅ carboné ou non, un liant dans un solvant approprié, et éventuellement un sel de lithium, en épandant le mélange obtenu sur un disque métallique servant de collecteur (par exemple un disque d'aluminium), puis en évaporant le solvant à chaud sous atmosphère d'azote. Le solvant est choisi en fonction du liant utilisé. Une électrode positive peut en outre être élaborée par extrusion d'un mélange de ses constituants.

Une électrode ainsi constituée peut être utilisée dans une batterie comprenant une électrode positive et une électrode négative séparée par un électrolyte comprenant un sel de lithium en solution dans un solvant. Le fonctionnement d'une telle batterie est assuré par la circulation réversible d'ions lithium dans l'électrolyte entre les électrodes. L'un des objets de la présente invention est une batterie dans laquelle l'électrolyte comprend un sel de lithium en solution dans un solvant, caractérisée en ce qu'elle comprend une électrode positive contenant comme matière active le γ-LiV₂O₅ carboné ou non, préparé selon le procédé de la présente invention.

Dans une batterie l'électrolyte comprend au moins un sel de lithium en solution dans un solvant. Comme exemple de sel, on peut citer LiClO₄, LiAsF₆, LiPF₆, LiBF₄, LiR_{F}SO₃, LiCH₃SO₃, LiN(R_{F}SO₂)₂, LiC(R_{F}SO₂)₃ et LiCF(R_{F}SO₂)₂, R_{F} représentant un groupe perfluoroalkyle ayant de 1 à 8 atomes de carbone ou un atome de fluor.

Le solvant de l'électrolyte peut être constitué par un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène, le carbonate de propylène, le carbonate de diméthyle, le carbonate de di-éthyle et le carbonate de méthyle et d'éthyle. Une batterie ayant un électrolyte à solvant polaire aprotique fonctionne généralement dans un domaine de température de -20°C à 60°C.

Le solvant de l'électrolyte peut en outre être un polymère solvatant. Comme exemples de polymères solvatants, on peut citer les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine tels que décrits dans FR-2 770 034 ; et les réseaux obtenus par polycondensation et portant des groupements qui permettent l'incorporation de groupements réticulables. On peut également citer les copolymères à blocs dans lesquels certains blocs portent des fonctions qui ont des propriétés rédox. Une batterie ayant un électrolyte à solvant polymère fonctionne généralement dans un domaine de température de 60°C à 120°C.

Le solvant de l'électrolyte peut en outre être un mélange d'un composé liquide aprotique polaire choisi parmi les composés polaires aprotiques cités ci-dessus et d'un polymère solvatant. Il peut comprendre de 2 à 98% en volume de solvant liquide, suivant que l'on souhaite un électrolyte plastifié avec une faible teneur en composé aprotique polaire, ou un électrolyte gélifié avec une teneur élevée en composé aprotique polaire. Lorsque le solvant polymère de l'électrolyte porte des fonctions ioniques, le sel de lithium est facultatif.

Le solvant de l'électrolyte peut aussi être un mélange d'un composé polaire aprotique tel que défini ci-dessus ou d'un polymère solvatant tel que défini ci-dessus, et d'un polymère polaire non solvatant comprenant des unités contenant au moins un hétéroatome choisi parmi le soufre, l'oxygène, l'azote et le fluor. Un tel polymère non solvatant peut être choisi parmi les homopolymères et les copolymères d'acrylonitrile, les homopolymères et les copolymères de fluorovinylidène, et les homopolymères et les copolymères de N-vinylpyrrolidone. Le polymère non solvatant peut en outre être un polymère portant des substituants ioniques, et notamment un sel de polyperfluoroéther sulfonate (tel qu'un Nafion^{®} précité par exemple) ou un sel de polystyrène sulfonate.

Dans un autre mode de réalisation, l'électrolyte de la batterie peut être un solide conducteur inorganique, choisi parmi les composés désignés habituellement par Lisicon, c'est-à-dire des solutions solides Li₄XO₄-Li₃YO₄ (X = Si ou Ge ou Ti ; Y = P ou As ou V), Li₄XO₄-Li₂AO₄ (X = Si ou Ge ou Ti ; A = Mo ou S), Li₄XO₄-LiZO₂ (X = Si ou Ge ou Ti ; Z = Al ou Ga ou Cr), Li₄XO₄-Li₂BXO₄ (X = Si ou Ge ou Ti ; B = Ca ou Zn), LiO₂-GeO₂-P₂O₅, LiO₂-SiO₂-P₂O₅, LiO₂-B₂O₃-Li₂SO₄, LiF-Li₂S-P₂S₅, Li₂O-GeO₂-V₂O₅ ou LiO₂-P₂O₅-PON. Une batterie au lithium comprenant un tel électrolyte fonctionne dans un très large domaine de température, de l'ordre de -20°C à 100°C.

Bien entendu, l'électrolyte d'une batterie peut contenir en outre les additifs utilisés de manière classique dans ce type de matériau, et notamment un plastifiant, une charge, d'autres sels, etc.

L'électrode négative de la batterie peut être constituée par du lithium métallique ou un alliage de lithium qui peut être choisi parmi les alliages β-LiAl, γ-LiAl, Li-Pb (par exemple Li₇Pb₂), Li-Cd-Pb, Li-Sn, Li-Sn-Cd, Li-Sn dans différentes matrices, notamment des matrices oxygénées ou des matrices métalliques (par exemple Cu, Ni, Fe, Fe-C), Li-Al-Mn. La batterie est alors une batterie au lithium. Lorsque le composé γ-LiV₂O₅ obtenu par le procédé de l'invention est utilisé pour l'élaboration de l'électrode positive, la batterie est à l'état déchargé.

L'électrode négative de la batterie peut en outre être constituée par un matériau composite comprenant un liant et un matériau capable d'insérer de manière réversible des ions lithium à bas potentiel rédox (désigné ci-après par matériau d'insertion), ledit matériau composite étant lithié au cours d'une étape préliminaire. Le matériau d'insertion peut être choisi parmi les matériaux carbonés, naturels ou de synthèse. Ces matériaux carbonés peuvent être par exemple un coke de pétrole, un graphite, un whisker de graphite, une fibre de carbone, un méso carbone micro grains, (désigné usuellement par meso carbon micro bead), un coke de brai (désigné usuellement par pitch coke), un coke aiguille (désigné usuellement par needle coke). Le matériau d'insertion peut en outre être choisi parmi les oxydes tels que par exemple LiₓMoO₂, LixW02, LiₓFe₂O₃, Li₄Ti₅O₁₂, LiₓTiO₂ ou parmi les sulfures tels que par exemple Li₉Mo₆S₆ et LiTiS₂ ou parmi les oxysulfures. On peut également utiliser des composés permettant de stocker réversiblement le lithium à bas potentiel, tels que des vanadates amorphes (par exemple LiₓNiVO₄), les nitrures (par exemple Li_{2,6-x}Co_{0,4}N, Li₂₊ₓFeN₂, Li₇₊ₓMnN₄), les phosphures (par exemple Li₉₋ₓVP₄), les arséniures (par exemple Li₉₋ₓVAs₄) et les oxydes à décomposition réversible (par exemple CoO, CuO, Cu₂O). Le liant est un liant organique stable électrochimiquement dans le domaine de fonctionnement de l'électrode négative. A titre d'exemple, on peut citer les homopolymères du fluorure de polyvinylidène ou un copolymère éthylène propylène diène. Un poly(fluorure de polyvinylidène) est particulièrement préféré. Une électrode composite négative peut être élaborée en introduisant le composé carboné dans une solution du liant dans un solvant polaire aprotique, en épandant le mélange obtenu sur un disque de cuivre servant de collecteur, puis en évaporant le solvant à chaud sous atmosphère d'azote. Lorsque l'électrode négative est constituée par un matériau d'insertion, la batterie est dite aux ions lithium. Lorsque le composé γ-LiV₂O₅ obtenu par le procédé de l'invention est utilisé pour l'élaboration de l'électrode positive d'une telle batterie, la batterie est à l'état chargé.

Une batterie comprenant un électrolyte solide peut se présenter sous la forme d'une succession de couches constituées respectivement par le matériau de l'électrode positive selon l'invention et son collecteur de courant, l'électrolyte solide, et l'électrode négative et éventuellement son collecteur de courant.

Une batterie comprenant un électrolyte liquide peut également se présenter sous forme d'une succession de couches constituées respectivement par le matériau de l'électrode positive selon l'invention et son collecteur de courant, un séparateur imbibé par l'électrolyte liquide, et le matériau constituant l'électrode négative et éventuellement son collecteur de courant.

La présente invention est illustrée plus en détail par les exemples donnés ci-après auxquels elle n'est cependant pas limitée.

### Exemple 1

On a ajouté à 150 ml d'eau, 24,0810 g (0,88 M) de V₂O₅-α, 4,7916 g (0,44 M) de Li₂CO₃ et 3,5 g de carbone. Une composition de carbone et de précurseurs de Li et de V s'est formée après une agitation en broyeur à billes de 2 heures. Ensuite, on a séché ladite composition pendant 2 heures à l'air à 90°C, puis on l'a soumise à un traitement à 420°C pendant 15 minutes sous argon. Le produit obtenu est désigné ci-après par GliV2O5-420, et il contient 8% de carbone résiduel.

### Exemple 2

On a mis en oeuvre le procédé de préparation de l'exemple 1, mais avec un traitement à 470°C au lieu de 420°C pendant 15 minutes. Le composé obtenu est désigné par *GliV2O5-470a,* et il contient 8% de carbone résiduel

### Exemple 3

On a ajouté à 50 ml d'eau, 24,0810 g (0,29 M) de V₂O₅-α, 4,7916 g (0,146 M) de Li₂CO₃ et 1,49 g de carbone. Une composition de carbone et de précurseurs de Li et de V s'est formée après une agitation en broyeur à billes de 2 heures. Ensuite, on a séché ladite composition pendant 2 heures à l'air à 90°C, puis on l'a soumise à un traitement à 470°C pendant 15 minutes sous argon. Le produit obtenu est désigné ci-après par GliV2O5-470b, et il contient 1% de carbone résiduel.

### Exemple 4

On a mis en oeuvre le procédé de préparation de l'exemple 3, mais avec un traitement à 350°C au lieu de 470°C pendant 30 minutes. Le composé obtenu est désigné par *Gl iV205-LIV-350 .*

### Exemple 5

A 15 ml d'une solution aqueuse de peroxyde d'hydrogène à 30%, on a ajouté 1 g de V₂O₅, 0,2306 g de LiOH, H₂O et 0,1453 g de carbone. Une composition de carbone et de précurseurs de Li et de V s'est formée en quelques minutes.

Ladite composition a été soumise à un séchage à 90°C pendant une nuit à l'air, puis à un traitement thermique de 15 min à 420°C sous argon. Le composé obtenu est désigné par GliV2O5ph-420.

### Exemple 6 (comparatif)

On a mis en oeuvre le procédé de préparation de l'exemple 2, mais le broyage a été réalisé sans addition d'eau et le traitement à 470°C a été effectué pendant 45 minutes au lieu de 15 minutes. Le composé obtenu est désigné par *GliV2O5-BSEC-470,* il contient LiₓV₂O₅-β comme impureté.

### Exemple 7

### Analyse par diffraction des rayons X

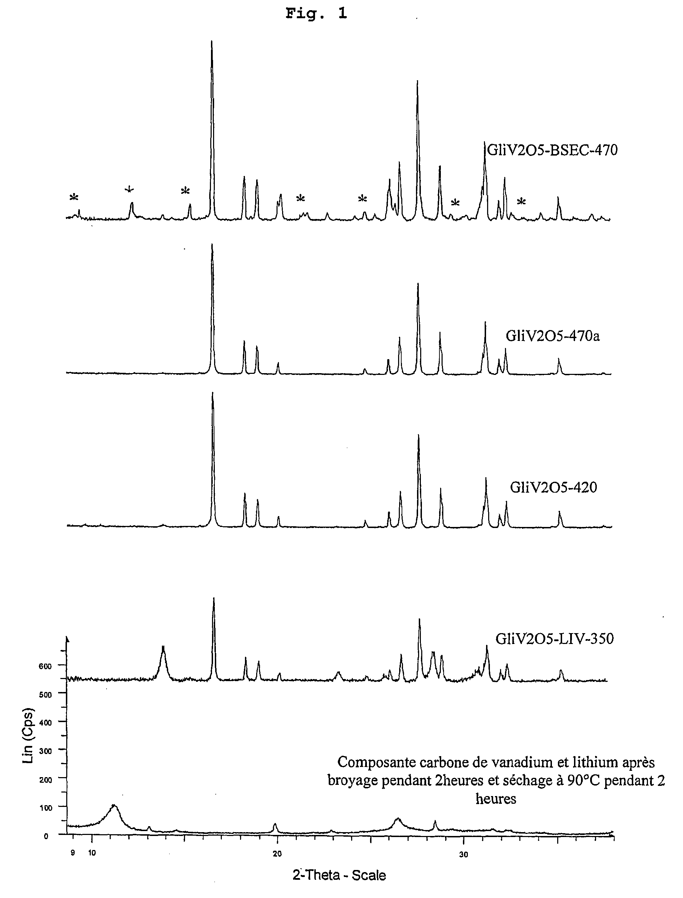

Les diagrammes de diffraction des rayons X des composés GliV2O5-420, GliV2O5-470a, GliV2O5-BSEC-470 et celui correspondant au la composition de carbone et de précurseurs de Li et de V formée après une agitation en broyeur à bille de 2 heures et un séchage pendant 2 heures à l'air à 90°C sans la 2^{ème} étape de traitement thermique ont été reportés sur la figure 1. Ces diagrammes montrent que le composé γ-LiV₂O₅ carboné peut être obtenu dès 15 minutes de recuit à 420°C. D'autre part, il est mis en évidence que l'utilisation de l'eau lors du broyage permet d'améliorer la réactivité de la composition de carbone et de précurseurs de Li et de V puisqu'un mélange à sec donne lieu à l'apparition d'impuretés de type LiₓV₂O₅-β(*) à 470°C même après 45 minutes. Par ailleurs le diagramme de diffraction de la composition de carbone et de précurseurs de Li et de V préparé selon l'exemple 6 comparatif montre qu'elle contient un hydrate de formule lamellaire Li₁₊ₐV₃O₈, 1H₂O en plus du carbone (11%).

### Exemple 8

### Mesure des performances

Les performances électrochimiques du composé GliV2O5-470b préparé selon l'exemple 3 et du composé GliV2O5-LIV-350 préparé selon l'exemple 4 ont été testées en batterie swagelok de laboratoire du type : Li/ électrolyte liquide (EC+DMC+LiPF₆) /GliV2O5-470b, fonctionnant à température ambiante. Pour l'électrode positive, on a ajouté 5% en masse de noir de carbone au composé de l'invention

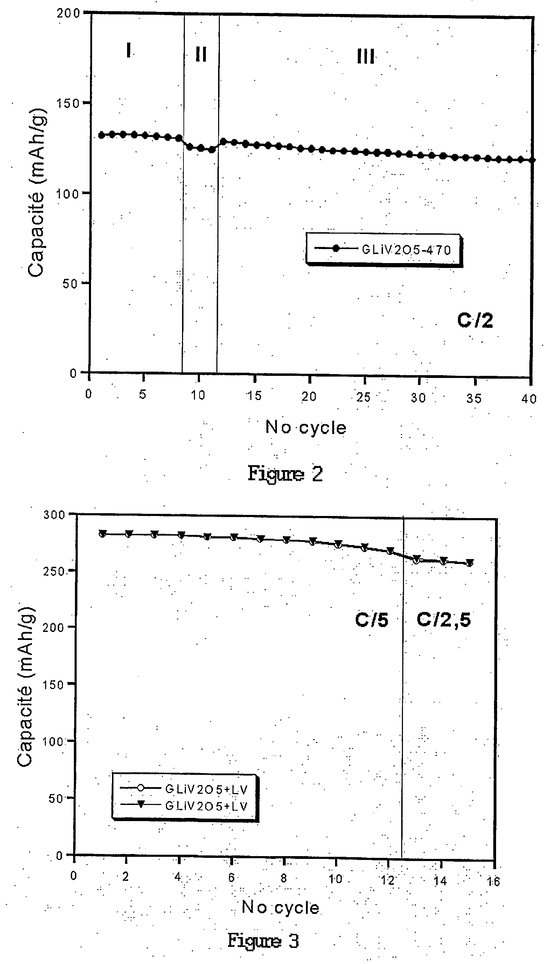

Les résultats obtenus avec le composé GliV2O5-470b sont reportés sur la figure 2. Les conditions de cyclage correspondent à 0,5 Li en réduction et 0,2 Li en oxydation par groupement formulaire et par heure. La fenêtre de potentiel était de 3 V à 4 V pour les cycles de 0 à 8, puis de 12 à 40 (zones I et III). La fenêtre de potentiel était de 3 V à 3,75 V pour les cycles de 9 à 11 (zone II).

Les résultats obtenus avec le composé GliV2O5-LIV-350 sont reportés sur la figure 3. Le cyclage a été effectué entre 3,7 V et 2 V avec une vitesse de cyclage correspondent à 0,4 Li par groupement formulaire et par heure pour les 12 premiers cycles, puis de 0,4Li par groupement formulaire et par heure.

Les figures 2 et 3 représentent la variation de la capacité pour chacun des matériaux. Il est ainsi confirmé sur la figure 2 qu'à une vitesse de cyclage de 0,5 Li par heure et par unité formulaire, le composé γ-LiV₂O₅ carboné (1% de carbone résiduel) élaboré selon la présente invention présente une capacité et une tenue en cyclage similaire à celle de l'art antérieur (US-6,716,372).

L'utilisation d'un oxyde γ**-**Li₂V₂O₅ préparé selon le procédé de l'invention permet par conséquent des économies d'énergie substantielles lors de la fabrication du matériau d'électrode positive pour une batterie au lithium.

## Revendications

1. Procédé pour la préparation d'un matériau constitué par γ-LiV₂O₅ pur ou en mélange intime avec du carbone, consistant à préparer une composition de carbone et de précurseurs de Li et de V, et à soumettre ladite composition à un traitement thermique, **caractérisé en ce que** :
- la composition est préparée par mise en contact de carbone, de V₂O₅-α et d'un précurseur de Li, en quantités telles que le rapport des concentrations [V₂O₅]/[Li] est compris entre 0,95 et 1,05, et le carbone est en excès d'au moins 25% par rapport à la stoechiométrie ;
- le traitement thermique est effectué en deux étapes : une première étape à une température entre 90°C et 150°C pendant une durée de 1 à 12 heures ; une seconde étape à une température entre 420°C et 500°C, pendant une durée comprise entre 10 min et 1 heure, sous atmosphère d'azote ou d'argon ou sous vide.

2. Procédé selon la revendication 1, **caractérisé en ce que** la première étape est effectuée sous agitation énergique.

3. Procédé selon la revendication 1, **caractérisé en ce que** le précurseur de Li est LiOH, H₂O ou Li₂CO₃, le précurseur de vanadium V₂O₅-α, le précurseur de lithium et le carbone sont introduits dans une quantité d'eau telle qu'on obtienne une suspension visqueuse, et l'agitation énergique est maintenue pendant une durée de 1 à 2 heures.

4. Procédé selon la revendication 3, **caractérisé en ce que** les concentrations en précurseurs varient entre 0,5 mol/l et 5 mol/l pour V₂O₅-α, entre 0,25 mol/l et 2,5 mol/l pour le précurseur de lithium Li₂CO₃, et entre 0,5 mol/l et 5 mol/l pour le précurseur de lithium LiOH,H₂O.

5. Procédé selon la revendication 1, **caractérisé en ce qu'**on ajoute au milieu réactionnel une solution aqueuse contenant de 10 à 50% en volume de peroxyde d'hydrogène, l'agitation énergique est maintenue pendant 5 minutes et les concentrations limites utilisables sont de 0,05 mol/l à 2 mol/l pour V₂O₅-α, et de 0,025 mol/l à 2 mol/l pour le précurseur de Li.

6. Procédé selon la revendication 5, **caractérisé en ce que** le précurseur de lithium est choisi parmi Li₂CO₃, LiOH,H₂O, LiCl, LiNO₃, ou un sel de lithium d'un acide carboxylique.

7. Procédé selon la revendication 6, **caractérisé en ce que** le sel de lithium est choisi parmi l'acétylacétonate de lithium, l'acétate de lithium, le stéarate de lithium, le formiate de lithium, l'oxalate de lithium, le citrate de lithium, le lactate de lithium, le tartrate de lithium, le pyruvate de lithium.

8. Procédé selon la revendication 5, **caractérisé en ce que** l'on prépare une suspension aqueuse de V₂O₅-α et de carbone, et l'on y ajouté une solution aqueuse de peroxyde, le précurseur de lithium pouvant être introduit dans la suspension aqueuse de V₂O₅-α et de carbone avant l'addition de la solution de peroxyde, ou après l'addition de la solution de peroxyde c'est-à-dire au cours de la formation du gel, et on laisse sous agitation énergique pendant 5 min.

9. Procédé selon la revendication 5, **caractérisé en ce que** les quantités respectives de précurseur de Li et de V₂O₅-α dans le milieu réactionnel sont telles que 0,1/z mol.l⁻¹ < [Li] < 1 1/z mol.l⁻¹ ; 0,1 mol.l⁻¹ < [V₂O₅] < 1 mol.l⁻¹, z étant le nombre d'atomes de lithium par unité formulaire du précurseur.

## Patentansprüche

1. Verfahren zur Herstellung eines Materials, das von γ-LiV₂O₅ gebildet wird, das rein oder in inniger Mischung mit Kohlenstoff ist, das darin besteht, eine Zusammensetzung aus Kohlenstoff und Vorstufen von Li und von V herzustellen und diese Zusammensetzung einer thermischen Behandlung auszusetzen, **dadurch gekennzeichnet, dass**:
- die Zusammensetzung durch Inkontaktversetzen von Kohlenstoff, von V₂O₅-α und von einer Vorstufe von Li in derartigen Mengen hergestellt wird, dass das Verhältnis der Konzentrationen [V₂O₅]/[Li] zwischen 0,95 und 1,05 inklusive ist und der Kohlenstoff im Verhältnis zur Stöchiometrie um mindestens 25 % im Überschuss ist,
- die thermische Behandlung in zwei Schritten durchgeführt wird: in einem ersten Schritt bei einer Temperatur zwischen 90 °C und 150 °C während einer Dauer von 1 bis 12 Stunden; in einem zweiten Schritt bei einer Temperatur zwischen 420 °C und 500 °C während einer Dauer zwischen 10 Minuten und 1 Stunde inklusive unter Stickstoff- oder Argonatmosphäre oder im Vakuum.

2. Verfahren nach Anspruch 1, **dadurch gekennzeichnet, dass** der erste Schritt unter energischem Rühren durchgeführt wird.

3. Verfahren nach Anspruch 1, **dadurch gekennzeichnet, dass** die Vorstufe von Li LiOH,H₂O oder Li₂CO₃ ist, wobei die Vorstufe von Vanadium V₂O₅-α, die Vorstufe von Lithium und der Kohlenstoff in eine Menge Wasser eingeführt sind, die derart ist, dass man eine zähflüssige Suspension enthält, und das energische Rühren während einer Dauer von 1 bis 2 Stunden aufrechterhalten wird.

4. Verfahren nach Anspruch 3, **dadurch gekennzeichnet, dass** die Vorstufenkonzentrationen zwischen 0,5 mol/l und 5 mol/l für V₂O₅-α, zwischen 0,25 mol/l und 2,5 mol/l für die Lithiumvorstufe Li₂CO₃ und zwischen 0,5 mol/l und 5 mol/l für die Lithiumvorstufe LiOH,H₂O schwanken.

5. Verfahren nach Anspruch 1, **dadurch gekennzeichnet, dass** dem Reaktionsmedium eine wässrige Lösung hinzugefügt wird, die 10 bis 50 Vol.-% Wasserstoffperoxyd enthält, wobei das energische Rühren während 5 Minuten aufrechterhalten wird und die verwendbaren Grenzkonzentrationen 0,05 mol/l bis 2 mol/l für V₂O₅-α und 0,025 mol/l bis 2 mol/l für die Li-Vorstufe betragen.

6. Verfahren nach Anspruch 5, **dadurch gekennzeichnet, dass** die Lithiumvorstufe aus Li₂CO₃, LiOH,H₂O, LiCl, LiNO₃ oder einem Lithiumsalz einer Carboxylsäure ausgewählt ist.

7. Verfahren nach Anspruch 6, **dadurch gekennzeichnet, dass** das Lithiumsalz aus dem Lithiumacetylacetonat, dem Lithiumacetat, dem Lithiumstearat, dem Lithiumformiat, dem Lithiuumoxalat, dem Lithiumcitrat, dem Lithiumlactat, dem Lithiumtartrat, dem Lithiumpyruvat ausgewählt ist.

8. Verfahren nach Anspruch 5, **dadurch gekennzeichnet, dass** eine wässrige V₂O₅-α- und Kohlenstoffsuspension hergestellt wird und dieser eine wässrige Peroxidlösung hinzugefügt wird, wobei die Lithiumvorstufe vor dem Zuschlag der Peroxidlösung oder nach dem Zuschlag der Peroxidlösung in die wässrige V₂O₅-α-und Kohlenstoffsuspension zuführbar ist, das heißt, während der Bildung des Gels, und 5 Minuten lang energisch gerührt wird.

9. Verfahren nach Anspruch 5, **dadurch gekennzeichnet, dass** die jeweiligen Li- und V₂O₅-α-Vorstufenmengen im Reaktionsmedium derart sind, dass 0,1/z mol.l⁻¹ < [Li] < 1 1/z mol.l⁻¹; 0,1 mol.l⁻¹ < [V₂O₅] < 1 mol.l⁻¹ ist, wobei z die Anzahl der Lithiumatome je Vorstufen-Formulierungseinheit ist.

## Claims

1. A process for the preparation of a material composed of pure γ-LiV₂O₅ or of γ-LiV₂O₅ as an intimate mixture with carbon which consists in preparing a composition formed of carbon and of precursors of Li and of V, and in subjecting said composition to a heat treatment, **characterized in that**:
- the composition is prepared by bringing carbon, V₂O₅-α and a Li precursor into contact in amounts such that the ratio of the [V₂O₅]/[Li] concentrations is between 0.95 and 1.05 and the carbon is in excess of at least 25% with respect to the stoichiometry;
- the heat treatment is carried out in two stages: a first stage at a temperature of between 90°C and 150°C for a time of 1 to 12 hours and a second stage at a temperature of between 420°C and 500°C for a time of between 10 min and 1 hour, under a nitrogen or argon atmosphere or under vacuum.

2. The process as claimed in claim 1, **characterized in that** the first stage is carried out with vigorous stirring.

3. The process as claimed in claim 1, **characterized in that** the Li precursor is LiOH·H₂O or Li₂CO₃, the vanadium precursor V₂O₅-α, the lithium precursor and the carbon are introduced into an amount of water such that a viscous suspension is obtained and vigorous stirring is maintained for a time of 1 to 2 hours.

4. The process as claimed in claim 3, **characterized in that** the concentrations of precursors vary between 0.5 mol/l and 5 mol/l for V₂O₅-α, between 0.25 mol/l and 2.5 mol/l for the lithium precursor Li₂CO₃, and between 0.5 mol/l and 5 mol/l for the lithium precursor LiOH·H₂O.

5. The process as claimed in claim 1, **characterized in that** an aqueous solution comprising from 10 to 50% by volume of hydrogen peroxide is added to the reaction medium, vigorous stirring is maintained for 5 minutes and the limiting concentrations which can be used are from 0.05 mol/l to 2 mol/l for V₂O₅-α and from 0.025 mol/l to 2 mol/l for the Li precursor.

6. The process as claimed in claim 5, **characterized in that** the lithium precursor is chosen from Li₂CO₃, LiOH·H₂O, LiCl, LiNO₃ or a lithium salt of a carboxylic acid.

7. The process as claimed in claim 6, **characterized in that** the lithium salt is chosen from lithium acetylacetonate, lithium acetate, lithium stearate, lithium formate, lithium oxalate, lithium citrate, lithium lactate, lithium tartrate or lithium pyruvate.

8. The process as claimed in claim 5, **characterized in that** an aqueous suspension of V₂O₅-α and of carbon is prepared, and an aqueous peroxide solution is added thereto, it being possible for the lithium precursor to be introduced into the aqueous suspension of V₂O₅-α and of carbon before the addition of the peroxide solution or after the addition of the peroxide solution, that is to say during the formation of the gel, and the mixture is left under vigorous stirring for 5 min.

9. The process as claimed in claim 5, **characterized in that** the respective amounts of Li precursor and of V₂O₅-α in the reaction medium are such that 0.1/z mol.l⁻¹ < [Li] < 1 1/z mol.l⁻¹ ; 0.1 mol.l⁻¹ < [V₂O₅] < 1 mol.l⁻¹, z being the number of lithium atoms per formula unit of the precursor.
